# EUROPEAN PATENT APPLICATION

(11) **EP 4 517 988 A1**
(43) Date of publication of application: **05.03.2025**
(21) Application number: 22944492.2
(22) Date of filing: 10.08.2022
(51) Int. Cl.: H01M 50/367

(54) **BATTERY AND ELECTRIC APPARATUS**

(30) Priority: 31.05.2022 CN 202221326174 U
(71) Applicant: Contemporary Amperex Technology Co., Limited, Ningde, Fujian 352100 (CN)
(72) Inventor: MIAO, Huimin, Ningde, Fujian 352100 (CN)
(74) Representative: Herrmann, Uwe
(86) International application number: PCT/CN2022/111511
(87) International publication number: WO 2023/231180

(57) **Abstract**

This application provides a battery and an electric apparatus, where the battery includes: a battery cell and a protective component. A first end surface of the battery cell is provided with a first pressure relief mechanism. The protective component is disposed opposite to the first end surface, where the protective component includes an air guide structure, the air guide structure includes an air guide cavity, and the air guide cavity is provided with an opening, the opening being disposed toward the first pressure relief mechanism. Through the provision of the air guide cavity on the protective component, an ejected matter ejected after the first pressure relief mechanism of the battery cell relieves pressure can enter the air guide cavity. Under the guidance of the air guide cavity, the ejected matter can be quickly discharged from the inside of the battery, thereby effectively preventing heat accumulation that could lead to more severe thermal runaway in the battery.

## Description

### CROSS-REFERENCE TO RELATED APPLICATIONS

This application refers to Chinese Patent Application No.202221326174.3, filed on May 31, 2022 and entitled "BATTERY AND ELECTRIC APPARATUS", which is incorporated herein by reference in its entirety.

### TECHNICAL FIELD

This application relates to the field of battery technologies, and in particular, to a battery and an electric apparatus.

### BACKGROUND

Currently, from the perspective of market development, application of traction batteries is becoming more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for traction batteries are also expanding.

During the use of the battery, the battery cells containing the electrode assemblies in the battery generate heat, especially when a severe failure occurs to the battery, causing high-temperature ejected matter to be produced inside the battery cells. Typically, a surface at one end of the battery cell is provided with a pressure relief mechanism for discharging the foregoing high-temperature ejected matter. The high-temperature ejected matter may easily cause other battery cells to become uncontrollable or damage related components, resulting in safety risks and threatening the safety of relevant users.

### SUMMARY

This application is intended to resolve at least one of the technical problems in the prior art. To this end, one objective of this application is to propose a battery to prevent high-temperature ejected matter discharged from inside the battery cell from generating adverse effects on the battery.

An embodiment according to a first aspect of this application provides a battery, including a battery cell, where a first end surface of the battery cell is provided with a first pressure relief mechanism; and a protective component, disposed opposite to the first end surface, where the protective component includes an air guide structure, the air guide structure includes an air guide cavity, and the air guide cavity is provided with an opening, the opening being disposed toward the first pressure relief mechanism.

In the technical solution of the embodiments this application, the provision of the air guide cavity on the protective component allows the ejected matter ejected from the first pressure relief mechanism of the battery cell to enter the air guide cavity. Under the guidance of the air guide cavity, the ejected matter can be quickly discharged from the inside of the battery, thereby effectively preventing a large amount of heat accumulation inside the battery and reducing the risk of heat diffusion or component damage caused by heat accumulation.

In some embodiments, a plurality of battery cells are provided and arranged side by side in the first direction, each of the multiple battery cells is provided with the first pressure relief mechanism, the air guide cavity extends in the first direction, and the opening is disposed opposite to the multiple first pressure relief mechanisms.

When the battery cells form at least one row, a group of multiple battery cells can share one air guide cavity for exhaust, the air guide cavity may be provided with an opening, the opening is disposed opposite to the first pressure relief mechanism, and the opening may be one and extend along a direction in which the multiple battery cells are arranged side by side, so that the one opening can simultaneously enable communication between the exterior of the first pressure relief mechanisms of multiple battery cells and the air guide cavity, making the product processing and manufacturing process more simple. The opening may also be multiple, each opening being disposed opposite to the pressure relief mechanism of one battery cell, so that each opening can enable communication between the exterior of one pressure relief mechanism and the air guide cavity, effectively improving the air guiding efficiency of the air guide structure.

In some embodiments, the air guide structure is configured as a recess formed by protrusion from a surface close to the first pressure relief mechanism toward a surface away from the first pressure relief mechanism, and the recess extends in the first direction.

With the recess formed in the protective component to constitute the foregoing air guide structure, the use of a structurally complicated air guide structure is avoided, thereby making the structure of the protective component simple and easy to manufacture.

In some embodiments, the air guide cavity further includes an air guide outlet provided in at least one end in the first direction.

The provision of the air guide outlet allows the high-temperature ejected matter that entered the air guide cavity to be discharged, avoiding heat accumulation in the air guide cavity. In some embodiments, the air guide outlet is provided in at least one end in the first direction, so that the high-temperature ejected matter can be guided to a position close to the edge of the internal space of the battery, so as to be further discharged out of the battery.

In some embodiments, the battery further includes a second pressure relief mechanism, the second pressure relief mechanism is configured to enable communication between the inside and the outside of the battery after being actuated, the second pressure relief mechanism is provided at an end of the battery in the first direction, the air guide cavity extends toward the second pressure relief mechanism, and the air guide outlet is provided close to the second pressure relief mechanism.

The high-temperature ejected matter is discharged to the outside of the internal space of the battery through the second pressure relief mechanism to avoid the accumulation of high-temperature ejected matter inside the battery box, which may cause thermal runaway, component damage, or the like inside the battery.

In some embodiments, the battery further includes an end plate, the end plate is provided at at least one end of the multiple battery cells which are arranged side by side, in the first direction or a second direction, and the end plate intersects and clips with the protective component, the second direction being perpendicular to the first direction.

The provision of the end plate and the clipping of the end plate with the protective component allow the protective component to be fixed inside the battery, preventing the protective component from shaking or misaligning inside the battery.

In some embodiments, the protective component further includes: multiple clasps, provided at an end of the protective component in the first direction and/or the second direction, and the end plate further includes a slot, the slot being provided corresponding to the clasp to engage with the clasp.

Through the provision of the clasp and the slot, the clipping and fixation between the end plate and the protective component are implemented, so that the installation stability of the protective component is improved.

In some embodiments, the air guide cavity further includes an air guide outlet provided in at least one end in the first direction, the clasp is provided at an end of the protective component in the first direction, and the clasp is located at one or two sides of the air guide outlet.

The clasp is provided at one or two sides of the air guide outlet, so that while achieving the clipping, the clasp structure can avoid the air guide outlet, preventing the clipping structure from affecting the discharge of gas from the air guide outlet.

In some embodiments, the battery includes two rows of battery cells, the protective component includes two air guide structures, the two air guide structures are respectively disposed opposite to the first pressure relief mechanisms of the two rows of battery cells, the two air guide structures respectively include a first air guide outlet and a second air guide outlet, and the first air guide outlet and the second air guide outlet are arranged side by side at an end of the protective component in the first direction.

For the battery containing two rows of battery cells, the protective component can be correspondingly provided with two air guide structures, and each air guide structure is configured to discharge the ejected matter from a corresponding row of battery cells. Therefore, the two rows of battery cells can independently discharge the ejected matter through their respective air guide outlets, without mutual interference, thereby improving the discharge efficiency of the ejected matter.

In some embodiments, the protective component includes multiple clasps, along a side-by-side arrangement direction of the first air guide outlet and the second air guide outlet, part of the multiple clasps are located between the first air guide outlet and the second air guide outlet, another part of the multiple clasps are located on one side of the first air guide outlet away from the second air guide outlet, and/or the rest of the multiple clasps are located on one side of the second air guide outlet away from the first air guide outlet.

Through the provision of the clasps between the first air guide outlet and the second air guide outlet, on one side of the first air guide outlet away from the second air guide outlet, and on one side of the second air guide outlet away from the first air guide outlet, the clasp structure can avoid the air guide outlets while allowing the clasps to be evenly distributed at an end of the protective component, thereby ensuring tight engagement between the protective component and a corresponding end plate.

In some embodiments, the protective component further includes a heat conduction structure, and at least part of the heat conduction structure is connected to the air guide structure.

The heat conduction structure can be used for dissipating heat from the air guide structure when high-temperature ejected matter travels in the air guide cavity, providing more heat dissipation paths for the air guide structure, and further enhancing its heat dissipation effect when guiding air. This is more conducive to reducing the risk of heat accumulation.

In some embodiments, the heat conduction structure includes a heat conduction layer attached to a cavity wall of the air guide cavity.

The foregoing heat conduction layer may be a thermal conductive material with a thermal conductivity of more than 0.6, for example, it may be a metal oxide coating. The heat conduction layer can be provided along the air guide cavity extending to the air guide outlet. The heat conduction layer is formed on the cavity wall of the air guide cavity, and can directly come in contact with the high-temperature ejected matter when the pressure relief mechanism relieves pressure, effectively transferring the heat out of the inside of the battery along the heat conduction layer.

In some embodiments, the heat conduction structure includes a heat conduction pad, and the heat conduction pad is provided on a surface of the protective component away from the battery cell.

The material of the heat conduction pad may be selected from materials with a high thermal conductivity, such as a thermal conductive material with a thermal conductivity of more than 0.6. For example, it may be a metal material. Through the usage of the configuration form of a heat conduction pad, the air guide structure and the heat conduction structure can be independently manufactured and then assembled into one during manufacturing, facilitating the improvement of manufacturing efficiency. In some embodiments, the heat conduction pad is provided outside the air guide structure. This allows the heat conduction pad to dissipate heat without occupying the space of the air guide cavity, ensuring smoother ventilation.

In some embodiments, the battery further includes an insulation member, where the insulation member is provided between the protective component and the battery cell.

The insulation member may be configured for wiring of wires, preventing the wires from short-circuiting or being damaged.

In some embodiments, the air guide structure is configured as the recess formed by protrusion from the surface close to the first pressure relief mechanism toward the surface away from the first pressure relief mechanism, the insulation member protrudes toward a direction approaching the first pressure relief mechanism to form an avoidance groove, and in a direction from the insulation member to the protective component, a projection of the avoidance groove at least partially overlaps with a projection of the recess.

The avoidance groove is formed on the insulation member, and along the direction from the insulation member to the protective component, which can be understood as a stacking direction of the two, the projection of the avoidance groove at least partially overlaps with the projection of the recess, where the avoidance groove and the recess together form the air guide cavity for guiding the discharge of high-temperature ejected matter. In addition, the avoidance groove is configured to be formed by the insulation member by protruding toward the direction approaching the first pressure relief mechanism, which can make the space of the formed air guide cavity larger, thereby improving the efficiency of the air guide structure in guiding the high-temperature ejected matter.

In some embodiments, at least part of the insulation member is made of a material with a melting temperature lower than 500°C.

When the first pressure relief mechanism ejects high-temperature ejected matter, the temperature of these high-temperature ejected matters can usually reach 500°C. Therefore, at least part of the insulation member is made of a material with a melting temperature lower than 500°C, so that the high-temperature ejected matter can melt through the insulation member, allowing the high-temperature ejected matter to enter the air guide cavity.

In some embodiments, a minimum melting temperature of the protective component is greater than 500°C.

Configuring the minimum melting temperature of the protective component to be greater than 500°C can reduce the probability of the high-temperature ejected matter melting through the protective component, thereby preventing the high-temperature ejected matter from reaching an upper surface of the battery box and melting through the box.

In some embodiments, the insulation member is provided with an avoidance opening, and the avoidance opening enables communication between an outer surface of the first pressure relief mechanism and the air guide cavity.

The insulation member can be provided with multiple avoidance openings to enable communication between the first pressure relief mechanism of each battery cell and the air guide cavity, each avoidance opening being disposed toward the corresponding first pressure relief mechanism. Therefore, in this case, the high-temperature ejected matter can enter the air guide cavity without having to burn through the insulation member, improving the efficiency of heat conduction and air guiding.

In some embodiments, the protective component is provided with a fireproof layer on a surface on a side facing the pressure relief mechanism.

The fireproof layer can further improve the high-temperature resistance performance of the protective component. The fireproof layer may have a heat resistance temperature higher than 500°C to prevent the protective component from being burned through when a temperature of the high-temperature ejected matter ejected from the first pressure relief mechanism is higher than 500°C.

An embodiment according to a second aspect of this application provides an electric apparatus, which includes the battery in the above embodiments, where the battery is configured to supply electric energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.

In the accompanying drawings, unless otherwise specified, the same reference signs throughout a plurality of accompanying drawings indicate the same or similar components or elements. These accompanying drawings may not necessarily be drawn to scale. It should be understood that these accompanying drawings illustrate only some embodiments disclosed in this application and should not be construed as limitations on the scope of this application.
FIG. 1 is a schematic structural diagram of a vehicle according to some embodiments of this application;
FIG. 2 is a schematic diagram of a structure inside a battery according to some embodiments of this application;
FIG. 3 is a locally enlarged schematic diagram of the interior of the battery shown in FIG. 2;
FIG. 4 is a schematic cross-sectional view of the interior of the battery shown in FIG. 2;
FIG. 5 is a schematic structural exploded view of the interior of the battery according to some embodiments of this application; and
FIG. 6 is a locally enlarged schematic diagram of the interior of the battery shown in FIG. 5.

### Description of reference signs:

vehicle 1;
battery 10, controller 20, motor 30;
protective component 100, air guide structure 110, first air guide structure 110a, second air guide structure 110b, air guide cavity 111, opening 112, air guide outlet 113, first air guide outlet 113a, second air guide outlet 113b, clasp 120, heat conduction pad 130;
battery cell 200, first pressure relief mechanism 210, first end surface 201, first row of battery cells 200a, second row of battery cells 200b;
end plate 300, slot 310;
insulation member 400, avoidance groove 410;
first direction X, and second direction Y.

### DESCRIPTION OF EMBODIMENTS

The following describes in detail the embodiments of technical solutions of this application with reference to the accompanying drawings. The following embodiments and the accompanying drawings are merely intended for a clearer description of the technical solutions of this application and therefore are used as just examples which do not constitute any limitations on the protection scope of this application. The drawings schematically illustrate only parts related to the technical solutions of this application and do not represent their actual structure as products.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

In the related technology, a battery contains multiple individual battery cells. A surface of the battery cell is provided with a pressure relief mechanism, which is configured to quickly relieve pressure by ejecting substances from inside the battery cell during thermal runaway of the battery cell. However, if these discharged high-temperature ejected matters are not promptly guided out of the battery, they can easily accumulate a large amount of heat inside the battery, leading to thermal propagation within the battery, or the accumulated heat may cause damage to other components inside the battery.

Based on these considerations, after in-depth research, the applicant has designed a battery. The battery includes a protective component. Through the provision of an air guide cavity on the protective component, an ejected matter ejected when a first pressure relief mechanism of the battery cell relieves pressure can enter the air guide cavity in time. With the guidance of the air guide cavity, the ejected matter can be directed away from the battery cells and an upper cover of the battery box, effectively preventing the accumulation of a large amount of heat inside the battery, and further reducing the risk of thermal runaway propagation or thermal damage to components within the battery.

The battery disclosed in the embodiments of this application may be used without limitation in electric apparatuses such as vehicles, ships, or aircrafts. The battery disclosed in this application may be used to constitute a power supply system for the electric apparatuses. This helps to prevent thermal runaway propagation or thermal damage to other components within the battery caused by high-temperature ejected matter from the battery cells, thereby enhancing the safety of the battery.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of the application being a vehicle 1 is used as an example for description of the following embodiments.

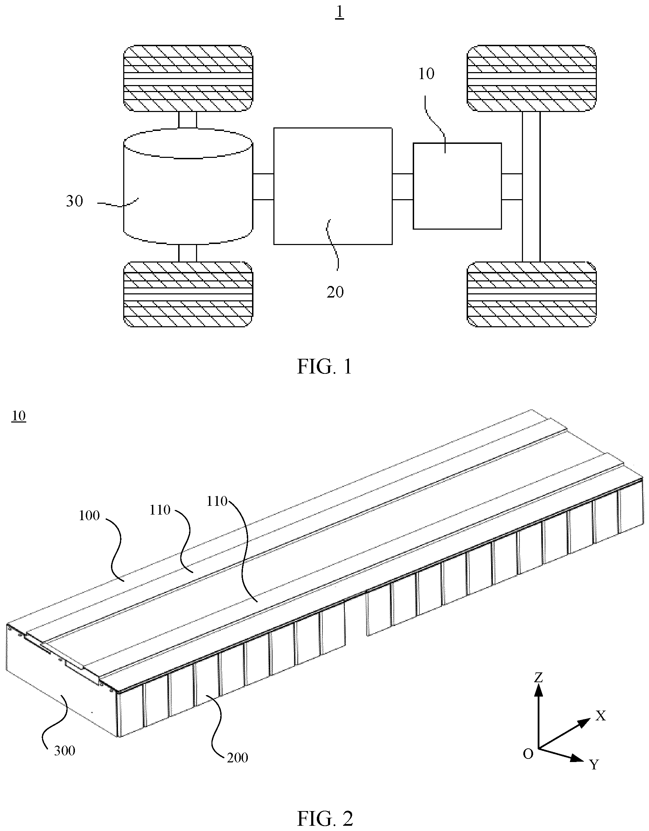

Referring to FIG. 1, FIG. 1 is a schematic structural diagram of a vehicle 1 according to some embodiments of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 is provided with a battery 10 inside, where the battery 10 may be disposed at the bottom, front, or rear of the vehicle 1. The battery 10 may be configured to supply electric energy to the vehicle 1. For example, the battery 10 may be used as an operational power source for the vehicle 1. The vehicle 1 may further include a controller 20 and a motor 30, and the controller 20 is configured to control the battery 10 to supply electric energy to the motor 30, for example, to satisfy a working electricity need during start, navigation, and driving of the vehicle 1.

In some embodiments of this application, the battery 10 can be used as not only the operational power source for the vehicle 1 but also a driving power source for the vehicle 1, replacing or partially replacing fossil fuel or natural gas to provide driving traction for the vehicle 1.

Referring to FIG. 2, FIG. 2 is a schematic diagram of a structure inside a battery according to some embodiments of this application. The battery 10 includes a box (not shown in the figure) and a battery cell 200, where the battery cell 200 is accommodated in the box. The box is configured to provide an accommodating space for the battery cell 200, and the box may be of various structures. In some embodiments, the box may include a first portion and a second portion. The first portion and the second portion fit together such that the first portion and the second portion jointly define an accommodating space for accommodating the battery cell 200.

Each battery cell 200 may be a secondary battery or a primary battery, or may be a lithium-sulfur battery, a sodium-ion battery, or a magnesium-ion battery, without being limited thereto. The battery cell 200 may be cylindrical, flat, cuboid, or of other shapes.

This application first provides a battery 10, where the battery 10 includes: a battery cell 200 and a protective component 100. The battery cell 200 includes a first end surface 201 and a second end surface, where the first end surface 201 and the second end surface may respectively face two opposite wall surfaces inside the battery box, for example the top wall and the bottom wall. The description in the following embodiments takes the first end surface 201 facing the top wall of the battery box as an example.

The first end surface 201 of the battery cell 200 is provided with a first pressure relief mechanism 210. The protective component 100 is disposed opposite to the first end surface 201, where the protective component 100 includes an air guide structure 110, the air guide structure 110 includes an air guide cavity 111, and the air guide cavity 111 is provided with an opening 112, the opening 112 being disposed toward the first pressure relief mechanism 210.

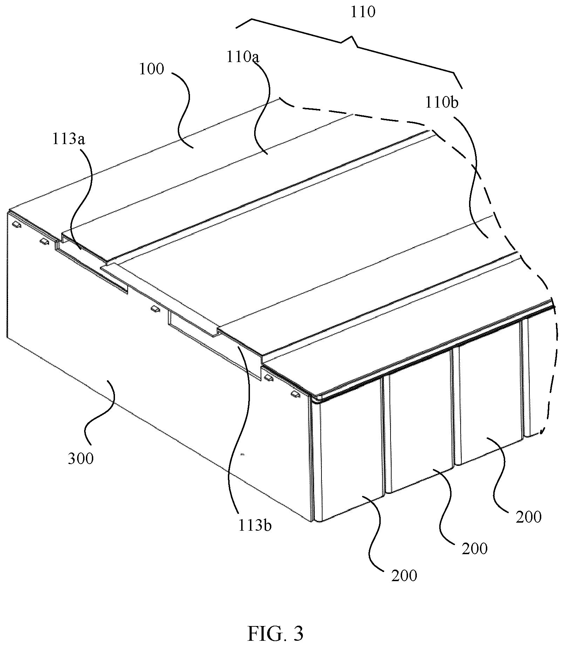

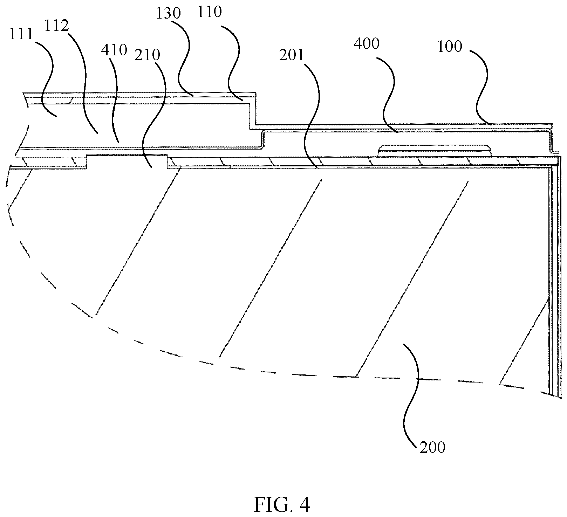

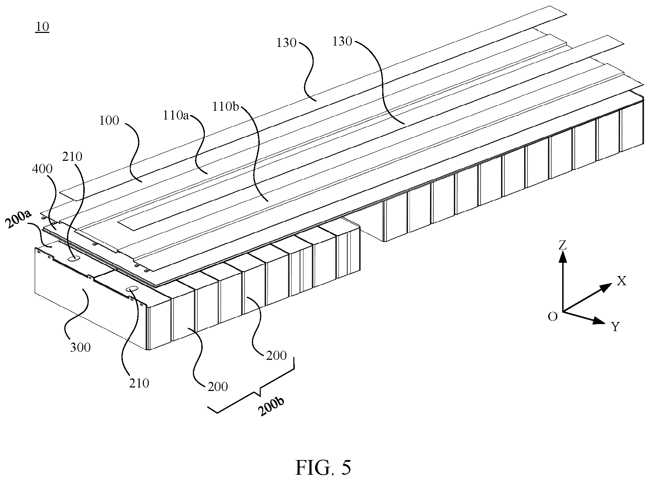

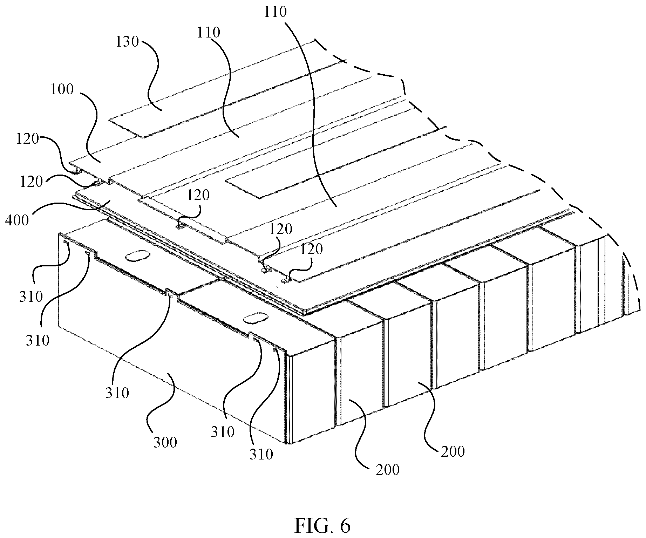

FIG. 3 is a locally enlarged schematic diagram of the interior of the battery shown in FIG. 2; FIG. 4 is a schematic cross-sectional view of the interior of the battery shown in FIG. 2; FIG. 5 is a schematic structural exploded view of the interior of the battery according to some embodiments of this application; and FIG. 6 is a locally enlarged schematic diagram of the interior of the battery shown in FIG. 5.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells or multiple battery modules. The box can prevent liquids or other foreign matter from affecting charging or discharging of the battery cell.

As shown in FIG. 2 and FIG. 3, in the battery 10, the battery cell 200 may be present in plurality, and the plurality of battery cells 200 may be connected in series, parallel, or series-parallel, where being connected in series-parallel means a combination of series and parallel connections of the plurality of battery cells 200. The plurality of battery cells 200 may be directly connected in series, parallel, or series-parallel, and then an entirety constituted by the plurality of battery cells 200 is accommodated in the box of the battery 10. Certainly, the battery 10 may be formed by a plurality of battery cells 200 being connected in series, parallel, or series-parallel first to form a battery module and then a plurality of battery modules being connected in series, parallel, or series-parallel to form an entirety which is accommodated in the box.

The battery 10 may further include other structures. For example, the battery 10 may further include a busbar configured to implement electrical connection between the plurality of battery cells 200. Although in the embodiments shown in FIGs. 2 and 3, multiple battery cells 200 are shown, in other embodiments, the battery 10 may also include one battery cell 200. Additionally, other arrangement or connection methods may also be applied to the multiple battery cells 200. In short, the implementation of this application is not limited by the number, arrangement method, and connection method of the battery cells 200.

The first end surface 201 of each battery cell 200 is provided with the first pressure relief mechanism 210. The first pressure relief mechanism 210 refers to a mechanism that, when actuated, can relieve the internal pressure of the battery cell 200 to reduce its internal pressure. The first pressure relief mechanism 210 may be a pressure relief valve that is actuated by responding to the internal temperature or pressure of the battery cell 200, or it may be a pressure relief switch that is actively controlled by an internal management component of the battery 10. The first pressure relief mechanism 210, after being actuated, can communicate the internal space with the external space of the battery cell 200 to discharge substances such as gases generated inside the battery cell 200 via the first pressure relief mechanism 210.

The air guide cavity 111 may be a structure with an accommodating space formed by the protective component 100, which can be configured to guide the ejected matter ejected from the first pressure relief mechanism 210 to another side of the internal space of the battery. Then another functional component can handle or discharge this portion of the gas to achieve the protection purpose. As shown in FIG. 4, the air guide cavity 111 can communicate with the first pressure relief mechanism 210 via the opening 112, so that the high-temperature ejected matter discharged from the exhaust opening can enter the air guide cavity 111. In some embodiments of this application, the protective component 100 may be configured as a hollow cavity body, where its hollow cavity is the air guide cavity. The cavity wall of the hollow cavity body facing the first pressure relief mechanism 210 may be provided with the foregoing opening 112; alternatively, the protective component 100 may be configured as a strip structure with a U-shaped cross-section groove, inside the groove is the air guide cavity, and the opening 112 is configured as an open face of the U-shaped groove.

In the technical solution of the embodiments of this application, the provision of the air guide cavity 111 on the protective component 100 and the provision of the opening 112 at a position on the air guide cavity 111 opposite to the first pressure relief mechanism 210 allow the ejected matter ejected from the first pressure relief mechanism 210 of the battery cell 200 to enter the air guide cavity 111 through the opening 112. Under the guidance of the air guide cavity 111, the ejected matter can be quickly discharged from the inside of the battery 10 or discharged to an end of the battery 10 away from the battery cell 200, thereby effectively preventing a large amount of heat accumulation inside the battery 10 and reducing the risk of heat diffusion or component damage caused by heat accumulation.

According to some embodiments of this application, a plurality of battery cells 200 are provided and arranged side by side in the first direction, each of the multiple battery cells 200 is provided with the first pressure relief mechanism 210, the air guide cavity 111 extends in the first direction, and the opening 112 is disposed opposite to the multiple first pressure relief mechanisms 210.

As shown in FIG. 2, the first direction may be a length direction of the battery, that is, the X direction shown in FIG. 2. The multiple battery cells 200 may all have the same model and size, and they can form multiple rows arranged in the first direction, where each row may include the same number of battery cells 200. In the embodiment shown in FIG. 2, the multiple battery cells 200 may form two rows of battery cells 200 arranged in the first direction.

For each of the battery cells 200, the first pressure relief mechanism 210 may be provided at a same position on the battery cell 200. As shown in FIG. 4, the first pressure relief mechanism 210 may be provided at a position in the middle of the first end surface 201 of the battery cell 200. Therefore, the multiple first pressure relief mechanisms 210 of each row of battery cells 200 will also be arranged in the first direction.

The air guide cavity 111 may be multiple, and the number of the air guide cavities 111 may be the same as the number of rows of battery cells 200, so that each air guide cavity 111 corresponds to the positions of the multiple first pressure relief mechanisms 210 of one row of battery cells 200, for guiding the ejected matter of that row of battery cells 200. Each air guide cavity 111 is provided with an opening 112. The foregoing opening 112 may also extend in the first direction, so as to simultaneously communicate the air guide cavity 111 with the exhaust openings of the multiple first pressure relief mechanisms 210.

In other embodiments of this application, the foregoing opening 112 may also not extend in the first direction but instead include multiple avoidance openings arranged in the first direction. Each avoidance opening is disposed opposite to one of the first pressure relief mechanisms 210, so as to communicate the first pressure relief mechanism 210 with the corresponding air guide cavity 111.

In other embodiments of this application, the first direction may also be a width direction of the battery. In this case, there may be a large number of rows of battery cells 200 and a large number of air guide cavities 111.

When the battery cells 200 form at least one row, a group of multiple battery cells 200 can share one air guide cavity 111 for exhaust, the air guide cavity 111 may be provided with an opening 112, the opening 112 is disposed opposite to the first pressure relief mechanism 210, and the opening 112 may be one and extend along a direction in which the multiple battery cells 200 are arranged side by side, so that the one opening 112 can simultaneously enable communication between the exterior of the first pressure relief mechanisms 210 of multiple battery cells 200 and the air guide cavity 111, making the product processing and manufacturing process more simple. The opening 112 may also be multiple, each opening 112 being disposed opposite to the first pressure relief mechanism 210 of one battery cell 200, so that each opening can enable communication between the exterior of one pressure relief mechanism and the air guide cavity, effectively improving the air guiding efficiency of the air guide structure.

The air guide structure 110 is configured as a recess formed by protrusion from a surface close to the first pressure relief mechanism 210 toward a surface away from the first pressure relief mechanism 210, and the recess extends in the first direction.

As shown in FIGs. 3 and 4, the air guide cavity 111 is constituted by a recess formed by upward protrusion of the protective component 100. The openings 112 of the air guide cavity 111 may be the openings 112 of the recess, where the openings 112 are disposed facing downward and are directly aligned with the first pressure relief mechanisms 210 of multiple battery cells 200. The recess can be formed by stamping the original plate-shaped protective component 100, and its cross-section is rectangular.

With the recess formed in the protective component 100 to constitute the foregoing air guide structure 110, the use of a structurally complicated air guide structure 110 is avoided, thereby making the structure of the protective component 100 simple and easy to manufacture. In addition, the structure of the recess facilitates the air guide cavity 111 to extend in the first direction, thereby improving the air guiding efficiency.

In some embodiments, the air guide cavity 111 further includes an air guide outlet 113 provided in at least one end in the first direction,

In the embodiment shown in FIGs. 3 and 4, each of the two ends of the air guide cavity 111 in the first direction is provided with an air guide outlet 113, where the air guide outlet 113 communicates the air guide cavity 111 with the external space to discharge the ejected matter inside the air guide cavity 111. As shown in FIG. 4, a shape of the air guide outlet 113 is the same as a cross-sectional shape of the air guide cavity 111. In some other embodiments, the air guide outlet 113 may be provided at only one end of the air guide cavity 111 in the first direction, with the other end closed, so that the high-temperature ejected matter is discharged from only one air guide outlet 113.

The provision of the air guide outlet 113 allows the high-temperature ejected matter that entered the air guide cavity 111 to be discharged, avoiding heat accumulation in the air guide cavity 111, which may cause thermal propagation or component damage inside the battery. In addition, the air guide outlet 113 is provided in at least one end in the first direction, so that the high-temperature ejected matter can be guided to a position close to the edge of the internal space of the battery, so as to be further discharged out of the battery.

In some embodiments, the battery 10 further includes a second pressure relief mechanism (not shown in the figure), the second pressure relief mechanism is configured to enable communication between the inside and the outside of the battery 10 after being actuated, the second pressure relief mechanism is provided at an end of the battery 10 in the first direction, the air guide cavity 111 extends toward the second pressure relief mechanism, and the air guide outlet 113 is provided close to the second pressure relief mechanism.

As mentioned above, the air guide outlet 113 can guide the high-temperature ejected matter to positions close to the edges at two ends within the internal space of the battery in the first direction, so that the high-temperature ejected matter can be discharged out of the internal space of the battery by using the second pressure relief mechanism. The foregoing second pressure relief mechanism can be provided on the battery box. The air guide outlet 113 is located close to the second pressure relief mechanism, so that the high-temperature ejected matter discharged from the air guide outlet 113 can be further discharged out of the battery through the second pressure relief mechanism.

When the air guide cavity 111 is provided with the air guide outlet 113 at both of the two ends in the first direction, the number of the second pressure relief mechanisms may be two, respectively provided at two ends of the box in the first direction, where each air guide outlet 113 is close to the corresponding second pressure relief mechanism.

The high-temperature ejected matter is discharged to the outside of the internal space of the battery through the second pressure relief mechanism to avoid the accumulation of high-temperature ejected matter inside the battery box, which may cause thermal runaway, component damage, or the like inside the battery 10.

In some embodiments, the battery further includes an end plate 300, the end plate 300 is provided at at least one end of the multiple battery cells 200 which are arranged side by side, in the first direction or a second direction, and the end plate 300 intersects and clips with the protective component 100, the second direction being perpendicular to the first direction.

The first direction may be the length direction of the battery, the second direction may be the width direction of the battery, the second direction is the Y direction as shown in FIG. 2, and in addition, the battery may have a thickness direction Z, the thickness direction Z being orthogonal to both the first direction X and the second direction Y. As shown in FIGs. 2 and 3, in some embodiments, the number of end plates 300 may be two, provided at two ends of the multiple battery cells 200 arranged side by side in the first direction, and the outer surfaces of these two end plates 300 abut against the inside walls of the battery box and are used to clamp and fix the multiple battery cells 200 arranged side by side.

When multiple battery cells 200 are arranged side by side in the second direction, end plates 300 can be respectively provided at two ends of the multiple battery cells 200 arranged side by side in the second direction.

In some other embodiments, the end plate 300 may also be provided at only one end of the multiple battery cells 200 arranged side by side in the first direction or the second direction; alternatively, end plates 300 may be provided at both ends in the first direction and both ends in the second direction, respectively. In other words, a total of 4 end plates 300 are provided. These end plates 300 may be rectangular plates, which can cover the battery cells 200 on outermost side of the rows of battery cells 200. An end of the end plate 300 close to the protective component 100, that is, an upper end of the end plate 300 may be provided with a clipping structure for clipping and fitting with the protective component 100.

The end plate 300 is configured to apply a constraining force to each row of battery cells 200, so as to clamp and fix the multiple battery cells 200 arranged side by side. Additionally, through the clipping of the end plate 300 with the protective component 100, the protective component 100 may be fixed inside the battery 10, preventing the protective component 100 from shaking or misaligning inside the battery 10.

In some embodiments, the protective component 100 further includes: a clasp 120, where the clasp 120 is provided at an end of the protective component 100 in the first direction or the second direction. Each end plate 300 further includes: a slot 310, where the slot 310 is provided corresponding to the clasp 120 so that the slots engage with the multiple clasps 120.

As shown in FIGs. 5 and 6, in some embodiments, the protective component 100 is provided with multiple clasps 120 protruding outward at an edge in the first direction. An upper edge of the corresponding end plate 300 may be provided with multiple upward protruding portions, and at least one slot 310 is respectively provided on each of the multiple protruding portions to facilitate clipping with the protective component 100, the number of clasps 120 matching with the number of slots 310. It should be added that, in other embodiments, the positions of the clasp 120 and the slot 310 can be interchanged. In other words, the clasp 120 may be provided on the end plate 300, while the slot 310 is provided at the end of the protective component 100 in the first direction or the second direction.

Through the provision of multiple clasps 120 and multiple slots 310, the clipping and fixation between the end plate 300 and the protective component 100 are implemented, so that the stability of the protective component 100 is improved.

The air guide cavity 111 further includes an air guide outlet 113 provided in at least one end in the first direction, the clasp 120 is provided at an end of the protective component 100 in the first direction, and the clasp 120 is located at one or two sides of the air guide outlet 113.

In some embodiments, multiple clasps 120 are provided on the edge of the end of the protective component 100 in the section where the air guide outlet 113 is not formed to avoid the air guide outlet 113. As shown in FIG. 6, when the protective component 100 includes two air guide cavities 111, the multiple clasps 120 may be provided between the air guide outlets 113 of the two air guide cavities 111 at the same end and on the outer sides of the two air guide outlets 113. At the same time, the upper edge of the corresponding end plate 300 may be provided with three upward protruding portions, where the protruding portions on two sides are configured to engage with the clasps 120 on the outer sides of the two air guide outlets 113; and the middle protruding portion is configured to engage with the clasp 120 between the two air guide outlets 113.

The clasp 120 is provided at one or two sides of the air guide outlet 113, so that while achieving the clipping, the clasp structure can avoid the air guide outlet, preventing the clipping structure from affecting the discharge of gas from the air guide outlet 113.

According to some embodiments of this application, the battery 10 includes two rows of battery cells 200, the protective component 100 includes two air guide structures 110, the two air guide structures 110 are respectively disposed opposite to the first pressure relief mechanisms 210 of the two rows of battery cells 200, the two air guide structures 110 respectively include a first air guide outlet 113a and a second air guide outlet 113b, and the first air guide outlet 113a and the second air guide outlet 113b are arranged side by side at an end of the protective component in the first direction.

In the embodiment shown in FIGs. 2 and 5, multiple battery cells 200 can form two rows of battery cells 200 arranged in the first direction, that is, the first row of battery cells 200a and the second row of battery cells 200b. The first row of battery cells 200a and the second row of battery cells 200b include the same number of battery cells 200, so that each row has the same length in the first direction.

The two air guide structures 110 include a first air guide structure 110a and a second air guide structure 110b, where the first air guide structure 110a corresponds to the first row of battery cells 200a and is configured to communicate with the multiple pressure relief mechanisms 210 of the first row of battery cells 200a; and the second air guide structure 110b corresponds to the second row of battery cells 200b and is configured to communicate with the multiple pressure relief mechanisms 210 of the second row of battery cells 200b.

In the embodiment shown in FIG. 3, the first air guide structure 110a and the second air guide structure 110b are recesses arranged parallel to each other. For the first air guide structure 110a, the first air guide outlet 113a is formed at an end of the protective component 110 in the first direction, and for the second air guide structure 110b, the second air guide outlet 113b is formed at the same end of the protective component 110 in the first direction. Since the two air guide structures 110 are arranged in parallel, the first air guide outlet 113a and the second air guide outlet 113b are arranged side by side.

For the battery containing two rows of battery cells 200, the protective component 100 can be correspondingly provided with two air guide structures 110, and each air guide structure 110 is configured to discharge the ejected matter from a corresponding row of battery cells 200. Therefore, the two rows of battery cells 200 can independently discharge the ejected matter through their respective air guide outlets 113, without mutual interference, thereby improving the discharge efficiency of the ejected matter.

According to some embodiments of this application, the protective component 110 includes multiple clasps 120, along a side-by-side arrangement direction of the first air guide outlet 113a and the second air guide outlet 113b, part of the multiple clasps 120 are located between the first air guide outlet 113a and the second air guide outlet 113b, another part of the multiple clasps 120 are located on one side of the first air guide outlet 113a away from the second air guide outlet 113b, and/or the rest of the multiple clasps 120 are located on one side of the second air guide outlet 113b away from the first air guide outlet 113a.

When the protective component 100 includes two air guide cavities 111, part of the multiple clasps 120 may be provided between the first air guide outlet 113a and the second air guide outlet 113b, part of the multiple clasps 120 may be provided on one side of the first air guide outlet 113a away from the second air guide outlet 113b, and the last part is provided on one side of the second air guide outlet 113b away from the first air guide outlet 113a. As shown in FIG. 6, the number of the multiple clasps 120 is 5, where one clasp 120 is provided between the two air guide outlets 113, and in addition, 2 clasps 120 are provided on the outer side of each air guide outlet 113 away from the other air guide outlet 113.

The upper edge of the corresponding end plate 300 may be provided with three upward protruding portions, where the protruding portions on two sides respectively include two slots 310, and are configured to engage with the clasps 120 on the outer sides of the two air guide outlets 113; and the middle protruding portion includes one slot 310, and is configured to engage with the clasp 120 between the two air guide outlets 113.

Through the provision of the clasps between the first air guide outlet 113a and the second air guide outlet 113b, on one side of the first air guide outlet 113a away from the second air guide outlet 113b, and on one side of the second air guide outlet 113b away from the first air guide outlet 113a, the clasp structure can avoid the air guide outlets 113 while allowing the clasps 120 to be evenly distributed at an end of the protective component 100, thereby ensuring tight engagement between the protective component 100 and a corresponding end plate 300.

According to some embodiments of this application, the protective component 100 further includes a heat conduction structure, and at least part of the heat conduction structure is connected to the air guide structure 110. In some embodiments, the heat conduction structure may be connected to a surface of the air guide structure 110 on a side facing the battery cell 200; and in some other embodiments, the heat conduction structure may further be connected to a surface of the air guide structure 110 on a side facing away from the battery cell 200.

The heat conduction structure can be used for dissipating heat from the air guide structure when high-temperature ejected matter travels in the air guide cavity, providing more heat dissipation paths for the air guide structure, and further enhancing its heat dissipation effect when guiding air. This is more conducive to reducing the risk of heat accumulation.

According to some embodiments of this application, the heat conduction structure includes a heat conduction layer attached to a cavity wall of the air guide cavity 111.

The foregoing heat conduction layer may be made of a thermal conductive material with a thermal conductivity of more than 0.6. In some embodiments, the heat conduction layer may be a coating, for example, it may be a metal oxide coating. The heat conduction layer may be provided along the air guide cavity 111 extending to the air guide outlet 113. The heat conduction layer is formed on the cavity wall of the air guide cavity 111, and can directly come in contact with the high-temperature ejected matter when the first pressure relief mechanism 210 relieves pressure, effectively transferring the heat out of the inside of the battery 10 along the heat conduction layer.

The heat conduction structure includes a heat conduction pad 130, and the heat conduction pad 130 is provided on a surface of the protective component 100 away from the battery cell 200.

As shown in FIGs. 5 and 6, the number of heat conduction pads 130 is the same as the number of air guide cavities 111. Each heat conduction pad 130 is a strip-shaped heat conduction pad 130 attached to a side of the corresponding air guide structure 110 facing away from the battery cell 200. Specifically, the heat conduction pad 130 may be attached to a region of the air guide structure 110 protruding away from the first pressure relief mechanism 210. The foregoing heat conduction pad 130 may be made of a material with good thermal conductivity, such as silicone.

The material of the heat conduction pad 130 may be selected from materials with a high thermal conductivity, such as a thermal conductive material with a thermal conductivity of more than 0.6. For example, it may be a metal material. Through the usage of the configuration form of a heat conduction pad 130, the air guide structure and the heat conduction structure can be independently manufactured and then assembled into one during manufacturing, facilitating the improvement of manufacturing efficiency. In addition, the heat conduction pad 130 is provided outside the air guide structure. This allows the heat conduction pad 130 to dissipate heat without occupying the space of the air guide cavity 111, ensuring smoother ventilation.

The battery further includes an insulation member 400, where the insulation member 400 is provided between the protective component 100 and the battery cell 200.

As shown in FIGs. 4 to 6, the battery cells 200 inside the battery are connected to the control system or electric apparatus 1 outside the battery via wires. These wires may be wired on the foregoing insulation member 400, for example, electrically connected to the battery cells 200 via additional apparatuses such as copper bars. The insulation member 400 can prevent the wires from short-circuiting or being damaged. The insulation member 400 is made of an insulating material, is approximately plate-shaped, and is provided between the protective component 100 and the battery cell 200.

The insulation member 400 may be configured for wiring of wires, preventing the wires from short-circuiting or being damaged.

The air guide structure 110 is configured as the recess formed by protrusion from the surface close to the first pressure relief mechanism 210 toward the surface away from the first pressure relief mechanism 210, the insulation member 400 protrudes toward a direction approaching the first pressure relief mechanism 210 to form an avoidance groove 410, and in a direction from the insulation member 400 to the protective component 100, a projection of the avoidance groove 410 at least partially overlaps with a projection of the recess.

As shown in FIG. 4, at least part of the insulation member 400 abuts against the part of the protective component 100 where no recess is formed, while other parts of the insulation member 400 and the part of the protective component 100 where the recess is formed protrude in opposite directions. The protective component 100 protrudes in a direction leaving the first pressure relief mechanism 210 to form a recess, while the insulation member 400 protrudes in a direction approaching the first pressure relief mechanism 210 to form an avoidance groove 410. The space between the recess and the avoidance groove 410 will form the air guide cavity 111. The direction from the insulation member 400 to the protective component 100 can be understood as a stacking direction of the protective component 100 and the insulation member 400, and the projection of the avoidance groove 410 at least partially overlaps with the projection of the recess means that the recess at least partially covers the avoidance groove 410 from above.

The avoidance groove 410 is formed on the insulation member 400, and along the direction from the insulation member 400 to the protective component 100, which can be understood as a stacking direction of the two, the projection of the avoidance groove 410 at least partially overlaps with the projection of the recess, where the avoidance groove 410 and the recess together form the air guide cavity 111 for guiding the discharge of high-temperature ejected matter. In addition, the avoidance groove 410 is configured to be formed by the insulation member 400 by protruding toward the direction approaching the first pressure relief mechanism 210, which can make the space of the formed air guide cavity 111 larger, thereby improving the efficiency of the air guide structure in guiding the high-temperature ejected matter.

In some embodiments, at least part of the insulation member 400 is made of a material with a melting temperature lower than 500°C.

When the first pressure relief mechanism 210 ejects high-temperature ejected matter, the temperature of these high-temperature ejected matters can usually reach 500°C. Therefore, at least part of the insulation member 400 is made of a material with a melting temperature lower than 500°C, so that the high-temperature ejected matter can melt through the insulation member 400, allowing the high-temperature ejected matter to enter the air guide cavity 111.

In some embodiments, a minimum melting temperature of the protective component 100 is greater than 500°C.

As mentioned above, the temperature of the high-temperature ejected matter can usually reach 500°C. Therefore, configuring the minimum melting temperature of the protective component 100 to be greater than 500°C can reduce the probability of the high-temperature ejected matter melting through the protective component 100, thereby preventing the high-temperature ejected matter from reaching an upper surface of the battery box and melting through the box.

In some embodiments, the insulation member 400 is provided with an avoidance opening, and the avoidance opening enables communication between an outer surface of the first pressure relief mechanism 210 and the air guide cavity 111.

The insulation member 400 can be provided with multiple avoidance openings to enable communication between the first pressure relief mechanism 210 of each battery cell 200 and the air guide cavity 111, each avoidance opening being disposed toward the corresponding first pressure relief mechanism 210. Therefore, in this case, the high-temperature ejected matter can enter the air guide cavity 111 without having to burn through the insulation member 400, improving the efficiency of heat conduction and air guiding.

In some embodiments, the protective component 100 is provided with a fireproof layer on a surface on a side facing the pressure relief mechanism.

The foregoing fireproof layer may be, for example, a graphite coating. The fireproof layer can further enhance the high-temperature resistance performance of the protective component. The fireproof layer may have a heat resistance temperature higher than 500°C to prevent the protective component 100 from being burned through when a temperature of the high-temperature ejected matter ejected from the first pressure relief mechanism 210 is higher than 500°C.

According to another aspect of this application, an electric apparatus 1 is further provided, where the battery 10 is configured to supply electric energy for the electric apparatus 1. For the specific structure of the electric apparatus 1, reference may be made to the description of FIG. 1, and details are not repeated herein.

As shown in FIGs. 2 to 4, embodiments of this application provide a battery 10, where the battery 10 includes: a box, multiple battery cells 200, a protective component 100, and an insulation member 400. The multiple battery cells 200 and the protective component 100 are all provided inside the box. The multiple battery cells 200 are arranged side by side in the length direction of the battery (that is, the X direction shown in FIG. 2) to form two rows.

Each battery cell 200 includes a first end surface 201 and a second end surface, where the first end surface 201 may face a top surface of the battery box, and the second end surface may face a bottom surface of the battery box. The first end surface 201 of the battery cell 200 is provided with a first pressure relief mechanism 210. The protective component 100 is disposed opposite to the first end surface 201, in other words, the protective component 100 is provided above the multiple battery cells 200 and completely covers the multiple battery cells 200.

The protective component 100 is provided with two recesses formed by the upward protrusion of the protective component 100. The two recesses are parallel to each other, and each recess corresponds to one row of battery cells 200. An air guide cavity 111 is formed inside the recess, and the opening 112 of the recess is disposed toward the multiple first pressure relief mechanisms 210 of the corresponding row of battery cells 200. The air guide cavity 111 formed by the recess guides the high-temperature ejected matter discharged from the first pressure relief mechanism 210. An air guide outlet 113 is formed at each of two ends of each recess in the length direction to discharge high-temperature ejected matter from the air guide cavity 111. Since the two recesses are parallel, the two air guide outlets 113 at the same end of the two recesses are arranged side by side.

The battery may further include two second pressure relief mechanisms (not shown in the figure), where the second pressure relief mechanisms are configured to communicate the inside with the outside of the battery 10 after being actuated. The two second pressure relief mechanisms may be provided at two ends of the battery 10 in the first direction, the air guide cavity 111 extends toward the second pressure relief mechanisms, and the air guide outlets 113 are provided close to the second pressure relief mechanisms. The high-temperature ejected matter may be discharged to the outside of the internal space of the battery 10 through the second pressure relief mechanism to avoid the accumulation of high-temperature ejected matter inside the battery box, which may cause thermal runaway, component damage, or the like inside the battery 10.

The insulation member 400 is provided between the protective component 100 and the battery cells 200, and is configured for wiring the wires connected to the battery cells 200.

As shown in FIGs. 5 and 6, two end plates 300 are respectively provided at two ends of the multiple battery cells 200 arranged side by side in the length direction of the battery 200. The outer surfaces of these two end plates 300 abut against the walls of the battery box and are used to clamp and fix the two rows of battery cells 200.

The upper ends of the two end plates 300 intersect and clip with two ends of the protective component 100 respectively. The protective component 100 further includes: 5 clasps 120, where the 5 clasps 120 are provided at an edge of the end of the protective component 100 in the length direction of the battery. One clasp 120 is provided between the two air guide outlets 113, and in addition, 2 clasps 120 are provided on the outer side of each air guide outlet 113 away from the other air guide outlet 113. Each end plate 300 further includes: 5 slots 310, where the 5 slots 310 are provided at an edge where the end plate 300 clips with the protective component 100, and are used to engage with the 5 clasps 120.

Each recess structure on the protective component 100 further includes a heat conduction layer attached to a cavity wall of the air guide cavity 111 and a heat conduction pad 130 provided on a surface of the protective component 100 away from the battery cells 200. The heat conduction pad 130 is strip-shaped, and its shape matches the protruding portion of the recess structure. The heat conduction pad 130 is attached to a region of the corresponding recess structure protruding away from the first pressure relief mechanism 210. The foregoing heat conduction pad 130 may be made of a material with good thermal conductivity, such as silicone.

At least part of the insulation member 400 abuts against the part of the protective component 100 where no recess is formed, while other parts of the insulation member 400 protrude in an opposite direction to the part of the protective component 100 where the recess is formed. The insulation member 400 protrudes in a direction approaching the first pressure relief mechanism 210 to form an avoidance groove 410. The recess and the avoidance groove 410 together will form the air guide cavity 111.

At least part of the insulation member 400 is made of a material with a melting temperature lower than 500°C, so that the high-temperature ejected matter can melt through the insulation member 400, allowing the high-temperature ejected matter to enter the air guide cavity 111. Configuring the minimum melting temperature of the protective component 100 to be greater than 500°C can reduce the probability of the high-temperature ejected matter melting through the protective component 100, thereby preventing the high-temperature ejected matter from reaching an upper surface of the battery box and melting through the box. In addition, the protective component 100 is provided with a fireproof layer on a surface on a side facing the pressure relief mechanism. The fireproof layer may be, for example, a graphite coating, where the fireproof layer may have a heat resistance temperature higher than 500°C to prevent the protective component 100 from being burned through when a temperature of the high-temperature ejected matter ejected from the first pressure relief mechanism 210 is higher than 500°C.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, comprising:
a battery cell, wherein a first end surface of the battery cell is provided with a first pressure relief mechanism; and
a protective component, disposed opposite to the first end surface, wherein the protective component comprises an air guide structure, the air guide structure comprises an air guide cavity, and the air guide cavity is provided with an opening, the opening being disposed toward the first pressure relief mechanism, wherein the air guide cavity further comprises an air guide outlet provided in at least one end in a first direction.

2. The battery according to claim 1, wherein multiple battery cells are provided and arranged side by side in the first direction, each of the multiple battery cells is provided with the first pressure relief mechanism, the air guide cavity extends in the first direction, and the opening is disposed opposite to the multiple first pressure relief mechanisms.

3. The battery according to claim 1 or 2, wherein
the air guide structure is configured as a recess formed by protrusion from a surface close to the first pressure relief mechanism toward a surface away from the first pressure relief mechanism, and the recess extends in the first direction.

4. The battery according to any one of claims 1 to 3, wherein the battery further comprises a second pressure relief mechanism, the second pressure relief mechanism is configured to enable communication between the inside and the outside of the battery after being actuated, the second pressure relief mechanism is provided at an end of the battery in the first direction, the air guide cavity extends toward the second pressure relief mechanism, and the air guide outlet is provided close to the second pressure relief mechanism.

5. The battery according to any one of claims 2 to 4, wherein the battery further comprises an end plate, the end plate is provided at at least one end of the multiple battery cells which are arranged side by side, in the first direction or a second direction, and the end plate intersects and clips with the protective component, the second direction being perpendicular to the first direction.

6. The battery according to claim 5, wherein the protective component further comprises:
a clasp, provided at an end of the protective component in the first direction and/or the second direction, and
the end plate further comprises a slot, the slot being provided corresponding to the clasp to engage with the clasp.

7. The battery according to claim 6, wherein
the clasp is provided at an end of the protective component in the first direction, and the clasp is located at one or two sides of the air guide outlet.

8. The battery according to claim 7, wherein the battery comprises two rows of battery cells, the protective component comprises two air guide structures, the two air guide structures are respectively disposed opposite to the first pressure relief mechanisms of the two rows of battery cells, the two air guide structures respectively comprise a first air guide outlet and a second air guide outlet, and the first air guide outlet and the second air guide outlet are arranged side by side at an end of the protective component in the first direction.

9. The battery according to claim 8, wherein the protective component comprises multiple clasps, along a side-by-side arrangement direction of the first air guide outlet and the second air guide outlet, part of the multiple clasps are located between the first air guide outlet and the second air guide outlet, another part of the multiple clasps are located on one side of the first air guide outlet away from the second air guide outlet, and/or the rest of the multiple clasps are located on one side of the second air guide outlet away from the first air guide outlet.

10. The battery according to any one of claims 1 to 9, wherein the protective component further comprises a heat conduction structure, and at least part of the heat conduction structure is connected to the air guide structure.

11. The battery according to claim 10, wherein the heat conduction structure comprises a heat conduction layer attached to a cavity wall of the air guide cavity.

12. The battery according to claim 10, wherein the heat conduction structure comprises a heat conduction pad, and the heat conduction pad is provided on a surface of the protective component away from the battery cell.

13. The battery according to any one of claims 1 to 12, wherein the battery further comprises an insulation member, wherein the insulation member is provided between the protective component and the battery cell.

14. The battery according to claim 13, wherein the air guide structure is configured as the recess formed by protrusion from the surface close to the first pressure relief mechanism toward the surface away from the first pressure relief mechanism, the insulation member protrudes toward a direction approaching the first pressure relief mechanism to form an avoidance groove, and in a direction from the insulation member to the protective component, a projection of the avoidance groove at least partially overlaps with a projection of the recess.

15. The battery according to claim 13 or 14, wherein at least part of the insulation member is made of a material with a melting temperature lower than 500°C.

16. The battery according to any one of claims 13 to 15, wherein a minimum melting temperature of the protective component is greater than 500°C.

17. The battery according to any one of claims 13 to 16, wherein the insulation member is provided with an avoidance opening, and the avoidance opening enables communication between an outer surface of the first pressure relief mechanism and the air guide cavity.

18. The battery according to any one of claims 1 to 17, wherein the protective component is provided with a fireproof layer on a surface on a side facing the first pressure relief mechanism.

19. An electric apparatus, comprising the battery according to any one of claims 1 to 18, wherein the battery is configured to supply electric energy.
